# EUROPEAN PATENT APPLICATION

(11) **EP 2 237 497 A1**
(43) Date of publication of application: **06.10.2010**
(21) Application number: 08800826.3
(22) Date of filing: 10.09.2008
(51) Int. Cl.: H04L 12/56

(54) **A METHOD AND A CONVERTER FOR DATA MESSAGE TRANSMISSION**

(30) Priority: 28.12.2007 CN 200710305682
(71) Applicant: Huawei Technologies Co., Ltd., Longgang District, Shenzhen Guangdong 518129 (CN)
(72) Inventor: GAO, Wei, Longgang District 518129 Shenzhen (CN); GU, Dujuan, Longgang District 518129 Shenzhen (CN)
(74) Representative: Kreuz, Georg Maria
(86) International application number: PCT/CN2008/072314
(87) International publication number: WO 2009/082896

(57) **Abstract**

A method for transmitting data packets and a corresponding converter are disclosed. The method includes: receiving a packet, which is sent by a source host using a Path Maximum Transmission Unit (PMTU) value supported by the source host as a Maximum Transmission Unit (MTU) value; sending an error information with a PMTU value of a translator to the source host if the PMTU value of the translator is smaller than the packet sent by the source host; receiving a packet, which is resent by the source host using a redetermined PMTU value as the MTU value, and sending the packet resent by the source host to a destination host; wherein the redetermined PMTU value is determined according to the PMTU value of the translator. The embodiments of the present invention ensure the maximum throughput of the network in the network transmission process, prevent packet loss, and improve the data transmission performance.

## Description

This application claims priority to Chinese Patent Application No. 200710305682.7, filed with the Chinese Patent Office on December 28, 2007 and entitled "Method for Transmitting Data Packet and Translator", which is hereby incorporated by reference in its entirety.

### FIELD OF THE INVENTION

The present invention relates to communications technologies, and in particular, to a method for transmitting a data packet and a translator.

### BACKGROUND

In an Internet Protocol Version 4 (IPv4) network, packet segmentation on the nodes along the IPv4 path can be realized by learning the Path Maximum Transmission Unit (PMTU) through an IPv4 PMTU mechanism. The PMTU refers to the maximum length of a packet transmissible on the packet forwarding path from the source to the destination, and is generally the minimum value of the Maximum Transmission Unit (MTU) on the path. The MTU is defined on an interface, and refers to the maximum length of a packet transmissible on the interface. However, if a Network Address Translation (NAT) device or a Network Address Translation - Protocol Translation (NATPT) device exists among the nodes along the path, the IPv4 PMTU mechanism fails. Likewise, in an Internet Protocol Version 6 (IPv6) network, the IPv6 PMTU mechanism cannot span the NATPT device, which leads to failure to learn the PMTU.

In the prior art, communication is performed between the public network and the private network through NAT, and communication is performed between IPv6 and IPv4 through NATPT. Failure of the dynamic PMTU mechanism leads to loss of plenty of fragments and packets in the network. This affects the correctness and efficiency of forwarding data, and therefore deteriorates performance of the entire network. For example, for lack of the dynamic PMTU support of IPv6, if the size of an IPv6 packet sent to the NATPT server is greater than the MTU at the egress interface of the NATPT server, the packet is lost. After the packet enters the IPv4 network, because the IPv4 PMTU mechanism fails, the node on the path segments the packet directly. Therefore, the PMTU cannot work normally after the NAT or NATPT, and the network does not support the PMTU mechanism. If the packet size is greater than the egress interface MTU, the node on the path has to process the packet in segments, and a packet may be segmented repeatedly.

The following problems have become apparent in the prior art: Segmenting a packet in the network, especially, segmenting repeatedly, increases extra overhead. Each packet after the segmentation includes its packet header. Although it is no need to worry about extra overhead related to the segmentation in a high-speed Local Area Network (LAN), the size of the segmented IPv4 packet or IPv6 packet is too small and may be discarded directly after the NATPT on the low-speed serial interface, considering the expenses.

### SUMMARY

The present invention provides a method for transmitting a data packet and a translator to ensure maximum throughput of the network and prevent losing the packet in the process of transmitting.

As a first aspect of the present invention the method for transmitting a data packet includes:
receiving a packet, which is sent by a source host using a Path Maximum Transmission Unit (PMTU) value supported by the source host as a Maximum Transmission Unit (MTU) value;
sending an error information with a PMTU value of a translator to the source host if the PMTU value of the translator is smaller than the packet sent by the source host;
receiving a packet, which is resent by the source host using a redetermined PMTU value as the MTU value, and sending the packet resent by the source host to a destination host;
   wherein the redetermined PMTU value is determined according to the PMTU value of the translator.

As a second aspect of the present invention a computer program product is provided. The computer program product includes computer program codes. When being executed by a computer, the computer program codes enable the computer to perform any step of the method for transmitting data packets under the present invention.

As a third aspect of the present invention a computer-readable storage medium is provided. The computer-readable storage medium stores computer program codes. When being executed by a computer, the computer program codes enable the computer to perform any step of the method for transmitting data packets under the present invention.

As a fourth aspect of the present invention the translator includes:
a receiving unit (301), configured to receive a packet which is sent by a sending entity using a Path Maximum Transmission Unit (PMTU) supported by the sending entity as a Maximum Transmission Unit (MTU) value; and
a comparing unit (302), configured to compare a size of the packet with a packet size required by a protocol corresponding to the packet; if the size of the packet does not fulfill the packet size required by the protocol, send an error information with the packet size required by the protocol to the sending entity through the receiving unit (301);
   wherein the receiving unit (301) is further configured to receive a packet which is resent by the sending entity using a redetermined PMTU value as the MTU value and send the packet resent by the sending entity to a destination receiving entity;
   wherein the redetermined PMTU value is determined according to the packet size required by the protocol.

In the technical solution described above, the PMTU value supported by the source host is used as the MTU when sending a packet; when error information is returned from the router, the packet is sent again, with the packet size being the PMTU value carried in the error information. This process goes on until the PMTU value supported on the path between the source host and the destination host is determined, thus ensuring the maximum throughput of the network, preventing losing the packet, and improving the data transmission performance.

### BRIEF DESCRIPTION OF THE DRAWINGS

To make the technical solution in the embodiments of the present invention or in the prior art clearer, the following outlines the accompanying drawings for illustrating the embodiments of the present invention or the prior art. Apparently, the accompanying drawings outlined below are for the exemplary purpose only.
FIG. 1 is a flowchart of a method provided in Embodiment 1 of the present invention;
FIG. 2 is a flowchart of a method provided in Embodiment 2 of the present invention; and
FIG. 3 shows a translator provided in Embodiment 3 of the present invention.

### DETAILED DESCRIPTION OF THE EMBODIMENTS

The following detailed description is directed to the technical solution in the embodiments of the present invention with reference to the accompanying drawings. However, the embodiments to be described are only part of, rather than all of, the embodiments of the present invention.

The embodiments of the present invention provide a method for transmitting a data packet to determine the MTU value on the transmission link in the packet transmission, ensuring the maximum throughput of the network, preventing losing the packet, and improving the data forwarding performance significantly.

In order to make the technical solution clearer, the present invention is described in more detail below with reference to preferred embodiments.

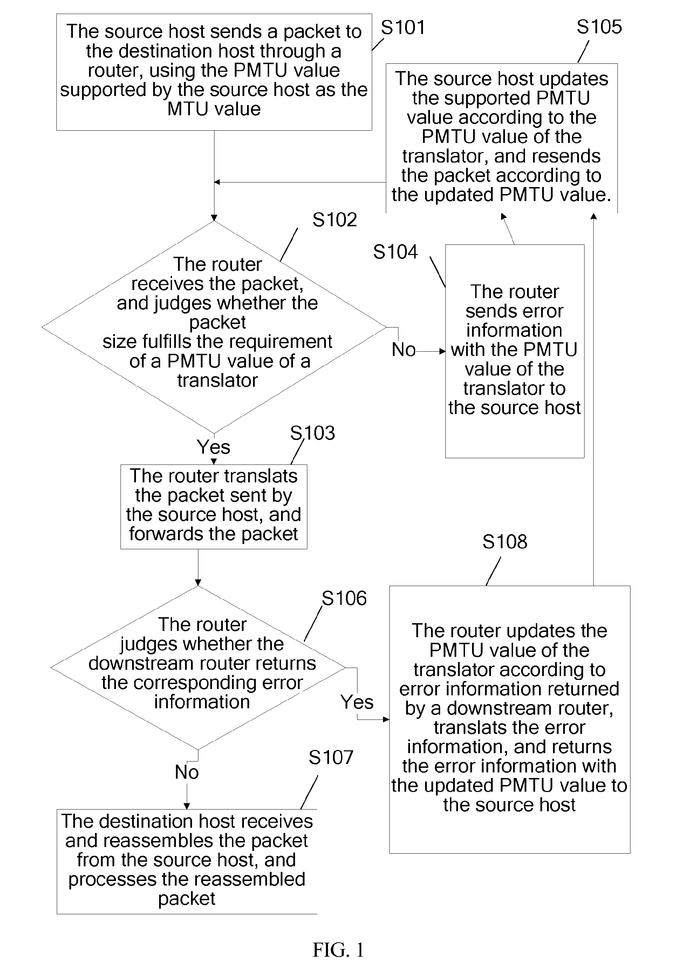

FIG. 1 is a flowchart of a method provided in Embodiment 1 of the present invention. The method includes:
S101: The source host sends a packet to a destination host through a router, using a PMTU value supported by the source host as an MTU value.
S102: The router receives the packet, and judges whether the size of the packet fulfills the requirement of a PMTU value of a translator. If the size of the packet fulfills the requirement, S103 is carried out. If the size of the packet does not fulfill the requirement, S104 is carried out.
S103: The router translates the packet sent by the source host, forwards the packet. S106 is carried out.
S104: The router sends error information with the PMTU value of the translator to the source host. S105 is carried out.
S105: The source host updates the PMTU value supported by the source host according to the PMTU value of the translator, and resends a packet using the updated PMTU value supported by the source host as the MTU value. Return to the S102.
S106: Whether error information is returned by a downstream router is judged. If error information is returned, S108 is carried out. If error information is not returned, S107 is carried out.
S107: The destination host receives and reassembles the packet from the source host, and processes the reassembled packet.
S108: The router updates the PMTU value of the translator according to the error information returned by the downstream router, translates the error information returned by the downstream router, and sends the translated error information with the updated PMTU value of the translator to the source host. Return to the S105.

Provided below is an example of this embodiment.

Using the PMTU value supported by the source host as the MTU value, the source host sends a packet to the destination host through a router.

The router compares the size of the received packet with the PMTU value of a translator specified in a protocol corresponding to the packet. If the size of the received packet is greater than the PMTU value of the translator, the router sends the information indicating that the destination host fails in receiving the packet to the source host. For example, the information indicating that the destination host fails in receiving the packet may be the error information with the PMTU value of the translator. Accordingly, the source host updates the PMTU value supported by the source host.

Moreover, if receiving the error information from a downstream router, the router updates the PMTU value of the translator according to the error information from the downstream router, translates the header and the MTU value option of a packet carrying the error information from the downstream router, and sends the translated error information with the PMTU value of the translator updated by the router to the source host.

After receiving the error information from the router, the source host sends the packet using the PMTU value of the translator as the MTU value until the destination host receives the packet.

The size of the packet firstly received by the destination host is determined to be a PMTU value supported on the path between the source host and the destination path. The source host sends the packet to the destination host through a router according to the determined PMTU value supported on the path between the source host and the destination path.

If the size of the packet translated by the router is smaller than the minimum transmission unit value of the translator specified in the protocol, the translated packet may be filled and forwarded.

For data packets of which the destinations are the same, the PMTU value supported on the path between the source host and the destination path may be determined when firstly sending a packet. Therefore, when the packet is firstly forwarded, parameters of the packet firstly forwarded is set up, for example, source address and destination address before translation, source address and destination address after translation, PMTU value of the translator, and protocol number. After the packet is firstly forwarded, the subsequent packet received by the router may be forwarded according to the parameters of the packet firstly forwarded.

In this embodiment, the source host sends a packet according to the PMTU value, and no packet needs to be segmented in the transmission process, thus reducing the workload of the intermediate router, preventing losing the packet, and improving performance of data transmission.

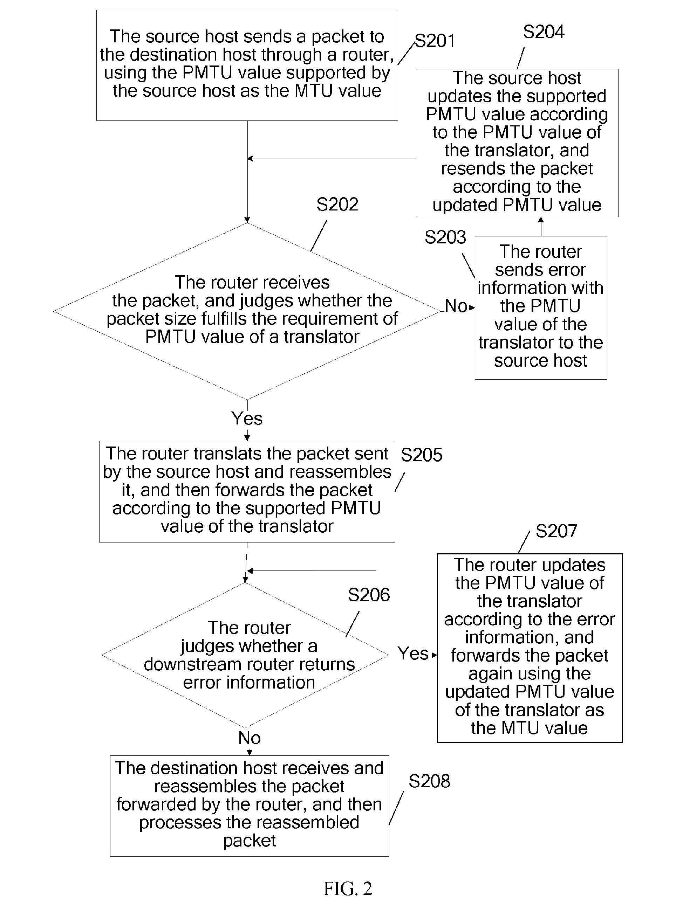

FIG. 2 is a flowchart of a method provided in Embodiment 2 of the present invention. The method includes:
S201: The source host sends a packet using a PMTU value supported by the source host as an MTU value, to the destination host through a router.
S202: The router receives the packet, and judges whether the size of the packet fulfills the requirement of a PMTU value of a translator. If the size of the packet fulfills the requirement, S205 is carried out, or else S203 is carried out.
S203: The router sends error information with the PMTU value of the translator to the source host. S204 is carried out.
S204: The source host updates the PMTU value supported by the source host according to the PMTU value of the translator, and resends a packet using the updated PMTU value supported by the source host as the MTU value. Return to the S202.
S205: The router translates the packet sent by the source host and reassembles the packet, and then forwards the reassembled packet using the PMTU value of the translator as the MTU value.
S206: Whether error information is returned by a downstream router is judged. If error information is returned, S207 is carried out, or else S208 is carried out.
S207: The router updates the PMTU value of the translator according to error information, and forwards the packet again using the updated PMTU value as the MTU value. Return to the S206.
S208: The destination host receives and reassembles the packet forwarded by the router, and then processes the reassembled packet.

Provided below is an example of this embodiment.

Using the PMTU value supported by the source host as the MTU value, the source host sends a packet to the destination host through a router.

The router compares the size of the received packet with the PMTU value of the translator. If the size of the received packet is greater than the PMTU value of the translator on the ingress interface of the router, the router sends information indicating that the destination host fails in receiving the packet to the source host. For example, the information indicating that the destination host fails in receiving the packet may be error information with the PMTU value of the translator.

In the case that the received packet is smaller than the PMTU value of the translator, if the packet is segmented packet, the packet need to be reassembled, translated, and sent; if the packet is not segmented packet, the packet is translated and forwarded directly to the destination host and the PMTU value of the translator is used as the MTU value.

If the router receives error information from a downstream router, the router needs to update the PMTU value of the translator, and forward the packet using the updated PMTU value as the MTU value.

After receiving the error information from the router, the source host sends the packet using the PMTU value of the translator as the MTU value until the router receives the packet. The PMTU value is determined as the PMTU value supported on the path between the source host and the router.

For data packets of which the destinations are the same, the PMTU value supported on the path between the source host and the router may be determined and the network address may be translated when firstly sending a packet. Therefore, when the packet is firstly forwarded, parameters of the packet firstly forwarded by the router is set up, for example, source address and destination address before translation, source address and destination address after translation, PMTU value of the translator, and protocol number. After the packet is firstly forwarded, the subsequent packet received by the router may be forwarded according to the parameters of the packet firstly forwarded.

The network on one side of the router is different from the network on the other side of the router. For example, an IPv6 network is used between the source host and the router, and an IPv4 network is used between the router and the destination host. In the IPv6 network, the minimum transmission unit is 1280 bytes and PMTU function of the IPv6 is enabled; in the IPv4 network, the minimum transmission unit is smaller than 1280 bytes and the PMTU function of the IPv4 is enabled. Therefore, the scope of the path transmission unit supported by the ingress interface may be different from that supported by the egress interface in the router. When the path transmission unit supported by one side of the router varies sharply from that supported by the other side of the router, the packet may be segmented on the router, and the segments are reassembled on the destination host that receives the packet. Alternatively, the packet is segmented on the source host, and reassembled on the router.

Comparing with the Embodiment 1, this embodiment prevents the low-speed LAN from affecting the packet sending performance of the high-speed LAN because the PMTU values supported on both sides of the router are learned to prevent sharp difference between the network on one side of the router and the network on the other side of the router.

The router in all the embodiments above is a communication device capable of packet forwarding, NAT, and NATPT.

The methods provided in the embodiments of the present invention are elaborated above; the following elaborates the apparatuses provided in the embodiments of the present invention.

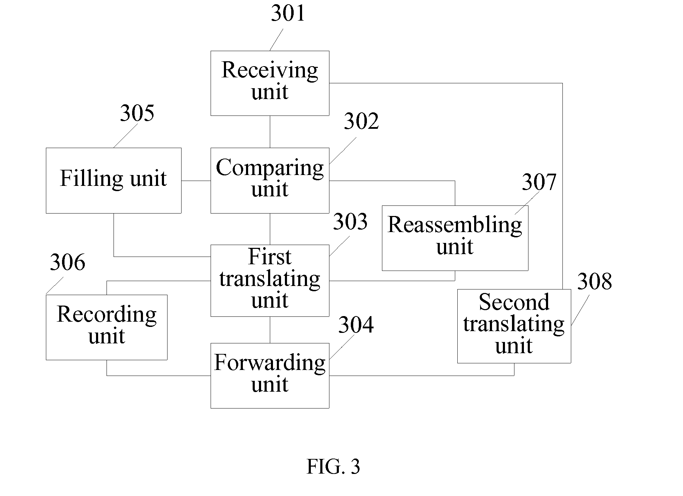

FIG. 3 shows a translator provided in Embodiment 3 of the present invention. The translator includes:
a receiving unit 301, configured to receive a packet which is sent by a sending entity using a PMTU value supported by the sending entity as an MTU value; and
a comparing unit 302, configured to compare the size of the packet with a packet size required by a protocol corresponding to the packet; if the size of the packet does not fulfill the packet size required by the protocol, error information with the packet size required by the protocol is sent to the sending entity through the receiving unit 301.

The receiving unit 301 is further configured to receive a packet which is resent by the sending entity using a redetermined PMTU value as the MTU value, where the redetermined PMTU value is determined according to the packet size required by the protocol; and the receiving unit 301 is further configured to send the received packet to a destination receiving entity.

The translator provided in this embodiment may further include:
a first translating unit 303, configured to perform NAT and NATPT on the packet if the size of the packet fulfills the packet size required by the protocol, which is compared by the comparing unit 302; and
a forwarding unit 304, configured to forward the packet translated by the first translating unit 303.

The translator further includes:
a filling unit 305, configured to fill the packet translated by the first translating unit 303 and forward the filled packet if the size of the packet translated by the first translating unit 303 is smaller than the minimum transmission unit value required by the protocol.

Further, the translator includes:
a recording unit 306, configured to record path parameters of a packet firstly forwarded by the forwarding unit 304, according to which the forwarding unit 304 forward the subsequent packet after the packet firstly forwarded.

Further, the translator includes a reassembling unit 307. When the network on one side of the translator is different from the network on the other side of the translator, the reassembling unit 307 is configured to segment or reassemble the packet if the size of the packet fulfills the packet size required by the protocol, which is compared by the comparing unit 302, and send the segmented or reassembled packet to the first translating unit 303.

Further, the translator includes:
a second translating unit 308, configured to translate a packet header and an MTU value option of an error information packet if the error information packet is received after the packet is forwarded, and return the translated error information with the PMTU value of the translator to the sending entity through the receiving unit 301.

The translators provided in the embodiments support the PMTU mechanism, prevent extra overhead caused by repeated processing in the packet transmission process, and prevent packet loss.

It can be seen from the embodiments above, a translator supporting the PMTU mechanism learns and determines the MTU value of a packet sent by the source host, and therefore, the PMTU supported on the link can be determined accurately, the maximum throughput of the network is ensured, packet loss is prevented, and data transmission performance is improved.

An ordinary person skilled in the art understands that all or part of the blocks of the method in the embodiments of the present invention may be implemented by a program instructing relevant hardware. The program may be stored in a computer readable storage medium.

The storage medium may be Read Only Memory (ROM), magnetic disk, or CD-ROM.

Elaborated above are a method for transmitting a data packet and a translator under the embodiments of the present invention. Although the invention is described through some exemplary embodiments, the invention is not limited to such embodiments.

## Claims

1. A method for transmitting a data packet, comprising:
receiving a packet, which is sent by a source host using a Path Maximum Transmission Unit (PMTU) value supported by the source host as a Maximum Transmission Unit (MTU) value;
sending an error information with a PMTU value of a translator to the source host if the PMTU value of the translator is smaller than the packet sent by the source host;
receiving a packet, which is resent by the source host using a redetermined PMTU value as the MTU value, and sending the packet resent by the source host to a destination host;
wherein the redetermined PMTU value is determined according to the PMTU value of the translator.

2. The method of claim 1, further comprising:
recording path parameters of a packet which is firstly forwarded, wherein the path parameters comprise a source address before translation, a destination address before translation, a source address after translation, a destination address after translation, the PMTU value of the translator, and a protocol number; and
forwarding subsequent packet according to the path parameters after the packet is firstly forwarded.

3. The method of claim 1, further comprising:
if receiving a returned error information, updating the PMTU value of the translator according to the returned error information, translating the returned error information and sending the translated error information with the updated PMTU value of the translator to the source host.

4. The method of claim 1, wherein the receiving the packet which is resent by the source host using the redetermined PMTU value as the MTU value and sending the packet resent by the source host to the destination host, comprises:
receiving the packet which is resent by the source host using the redetermined PMTU value as the MTU value; wherein the redetermined PMTU value is determined according to the PMTU value of the translator and supported on the path between the source host and the destination host; and
performing Network Address Translation (NAT) or Network Address Translation-Protocol Translation (NATPT) on the packet which is resent by the source host, and forwarding the translated packet to the destination host using the redetermined PMTU value supported on the path between the source host and the destination host as the MTU value.

5. The method of claim 4, further comprising:
filling and forwarding the translated packet if the size of the translated packet is smaller than a minimum transmission unit value of the translator required by a protocol corresponding to the translated packet.

6. The method of claim 1, wherein the receiving the packet which is resent by the source host using the redetermined PMTU value as the MTU value and sending the packet resent by the source host to the destination host, comprises:
receiving the packet which is resent by the source host using the redetermined PMTU value as the MTU value; wherein the redetermined PMTU value is determined according to the PMTU value of the translator and supported on the path between the source host and a translator; and
performing Network Address Translation (NAT) and Network Address Translation-Protocol Translation (NATPT) on the packet resent by the source host, and forwarding the translated packet to the destination host using a PMTU value supported on the path between the translator and the destination host as the MTU value.

7. The method of claim 6, further comprising:
if receiving a returned error information, updating the PMTU value of the translator according to the returned error information, and re-forwarding the translated packet to the destination host using the updated PMTU value of the translator as the MTU value.

8. A computer program product, wherein:
the computer program product comprises computer program codes; and
when being executed by a computer, the computer program codes enable the computer to carry out steps covered in any one of claims 1-7.

9. A computer-readable storage medium, wherein:
the computer-readable storage medium stores computer program codes; and
when being executed by a computer, the computer program codes enable the computer to carry out steps covered in any one of claims 1-7.

10. A translator, comprising:
a receiving unit (301), configured to receive a packet which is sent by a sending entity using a Path Maximum Transmission Unit (PMTU) supported by the sending entity as a Maximum Transmission Unit (MTU) value; and
a comparing unit (302), configured to compare a size of the packet with a packet size required by a protocol corresponding to the packet; if the size of the packet does not fulfill the packet size required by the protocol, send an error information with the packet size required by the protocol to the sending entity through the receiving unit (301);
wherein the receiving unit (301) is further configured to receive a packet which is resent by the sending entity using a redetermined PMTU value as the MTU value and send the packet resent by the sending entity to a destination receiving entity; wherein the redetermined PMTU value is determined according to the packet size required by the protocol.

11. The translator of claim 10, further comprising:
a first translating unit (303), configured to perform Network Address Translation (NAT) and Network Address Translation-Protocol Translation (NATPT) on the packet if the size of the packet fulfills the packet size required by the protocol, which is compared by the comparing unit (302); and
a forwarding unit (304), configured to forward the packet translated by the first translating unit (303).

12. The converter of claim 11, further comprising:
a filling unit (305), configured to fill the packet translated by the first translating unit (303) and forward the filled packet if the size of the packet translated by the first translating unit (303) is smaller than a minimum transmission unit value required by the protocol.

13. The translator of claim 11, further comprising:
a recording unit (306), configured to record path parameters of a packet firstly forwarded by the forwarding unit (304), according to which the forwarding unit (304) forward the subsequent packet after the packet firstly forwarded.

14. The translator of claim 11, further comprising:
a reassembling unit (307), configured to segment or reassemble the packet if the size of the packet fulfills the packet size required by the protocol, which is compared by the comparing unit (302), and send the segmented or reassembled packet to the first translating unit (303) when the network on one side of the translator is different from the network on the other side of the translator.

15. The translator of claim 11, further comprising:
a second converting unit (308), configured to translate a packet header and an MTU value option of an error information packet if the error information packet is received after the packet is forwarded, and return the translated error information with the PMTU value of the translator to the sending entity through the receiving unit (301).
